Europäisches Patentamt

European Patent Office

Office européen des brevets

(19)

(11) EP 0 702 316 A1

(12) EUROPEAN PATENT APPLICATION

(43) Date of publication:
20.03.1996 Bulletin 1996/12

(51) Int. Cl.$^6$: G06K 7/08, G06K 19/07

(21) Application number: 95114147.2

(22) Date of filing: 08.09.1995

(84) Designated Contracting States:
DE FR GB IT

(30) Priority: 15.09.1994 JP 259896/94

(71) Applicant: Suzuki, Kenichi
Hiratsuka, Kanagawa-ken (JP)

(72) Inventor: Suzuki, Kenichi
Hiratsuka, Kanagawa-ken (JP)

(74) Representative: Grünecker, Kinkeldey,
Stockmair & Schwanhäusser
Anwaltssozietät
Maximilianstrasse 58
D-80538 München (DE)

(54) Contactless data carrier system

(57) There is provided a data carrier and a transceiver capable of transmission/ reception of data over a wide area.

The transmission/reception of data is achieved by applying an alternating voltage over a pair of conductors thereby generating an alternating electric field (4) over a wide area, and the alternating electric field (4) is detected by an electrostatic coupling to an amplifier with a high input impedance installed in the data carrier.

Fig. 1

Printed by Rank Xerox (UK) Business Services
2.9.13/3.4

## Description

**Reference Cited U.S. Patent Document** 4,818,855 Apr.4,1989 Mongeon et al.

## Background of the Invention

The present invention is a type of contactless data carrier system.

Most conventional data carrier systems use radio waves, microwaves, or light beams as a medium to transmit the data which means that the active range of the data carrier is only from fifty centimeters to two meters. Because of the range limitation of the data carrier system (including the IC card) the device must be located on the front or outside surface. Some other limitations of the data carrier systems are that the transmission angle must be less than 45 degrees, the dead angles are wide and the dead points are many within the range that the data is carried.

## Summary of the Invention

The present invention, unlike conventional contactless data carrier systems, involves a contactless data carrier system that has a wider transmission angle, and no dead angles or dead points. The present invention makes it possible to utilize contactless data carrier systems in a wider range of applications which were difficult to make application to until now. Detailed description of the data carrier system given hereafter.

## Brief Description of the Drawings

[Fig. 1]
An embodiment for producing an electric field.

[Fig. 2]
Another embodiment for producing an electric field.

[Fig. 3]
A view for explaining the operation of the electric field on a data carrier.

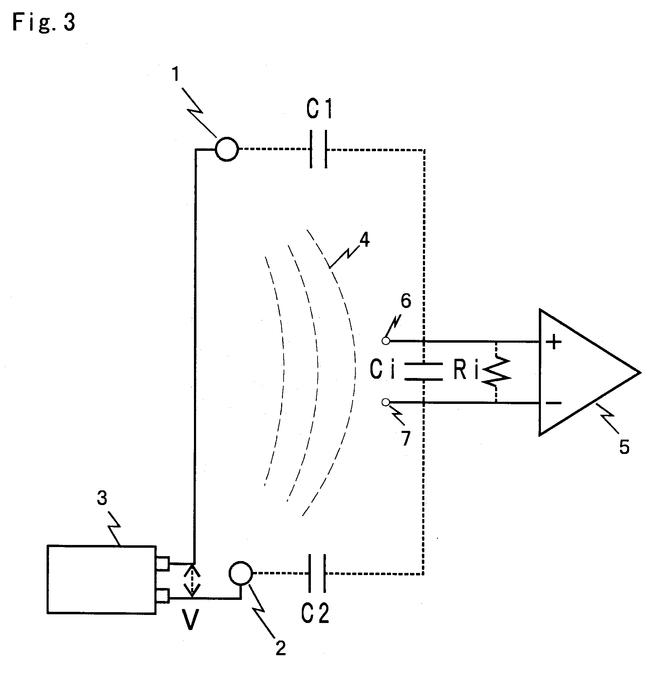

[Fig. 4]
A circuit equivalent to the circuit as shown in Fig. 3.

[Fig. 5]
A block diagram in a data carrier.

[Fig. 6]
Another embodiment for producing an electric field.

[Fig. 7]
Another embodiment for producing an electric field.

[Fig. 8]
A view for explaining the operation of the electric field due to a plate shaped conductor.

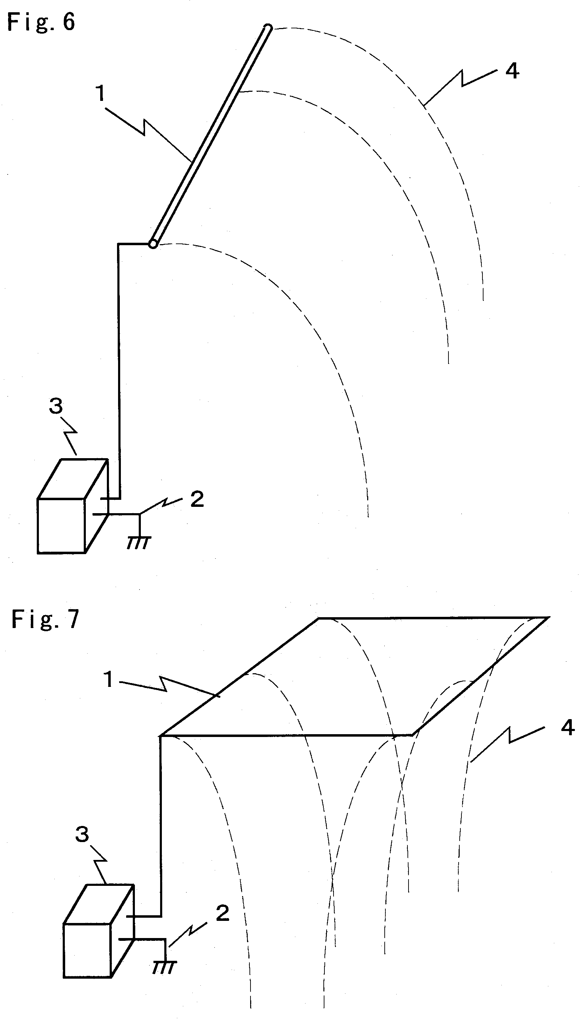

[Fig. 9]
Another embodiment similar to the embodiment of Fig. 7.

[Fig. 10]
Another embodiment similar to the embodiment of Fig. 7.

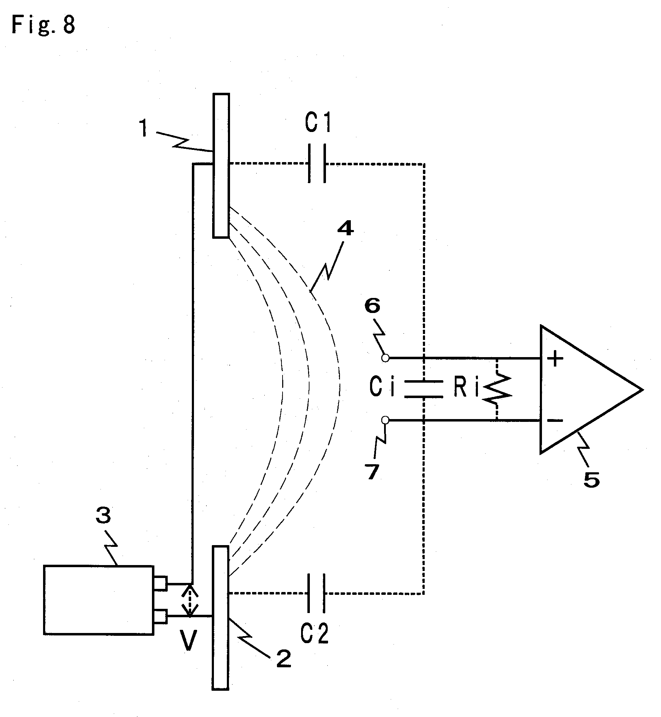

[Fig. 11]
A perspective view of the embodiment as shown in Fig. 8.

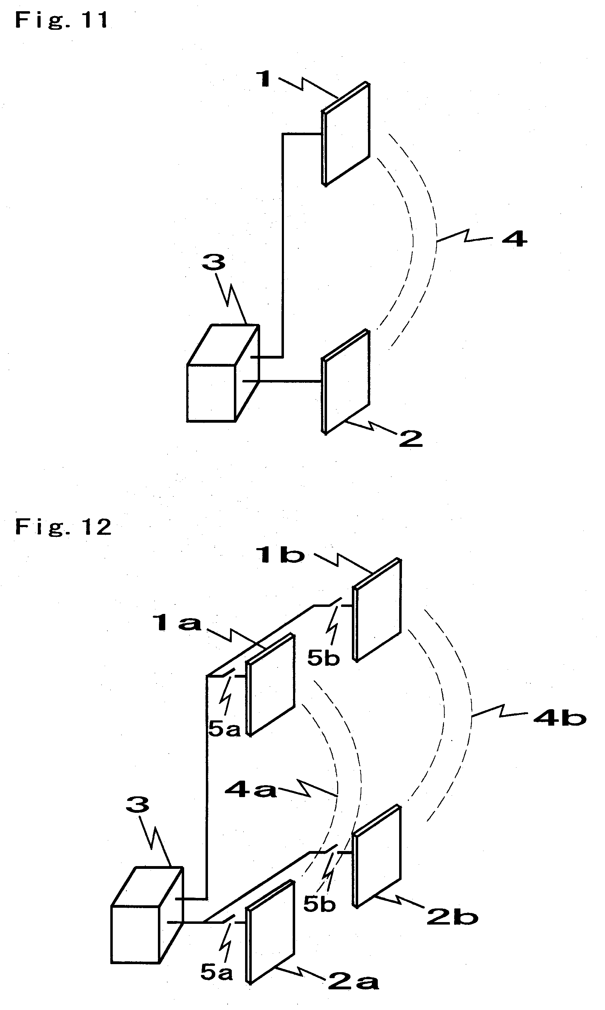

[Fig. 12]
The embodiment similar to the embodiment of Fig. 11.

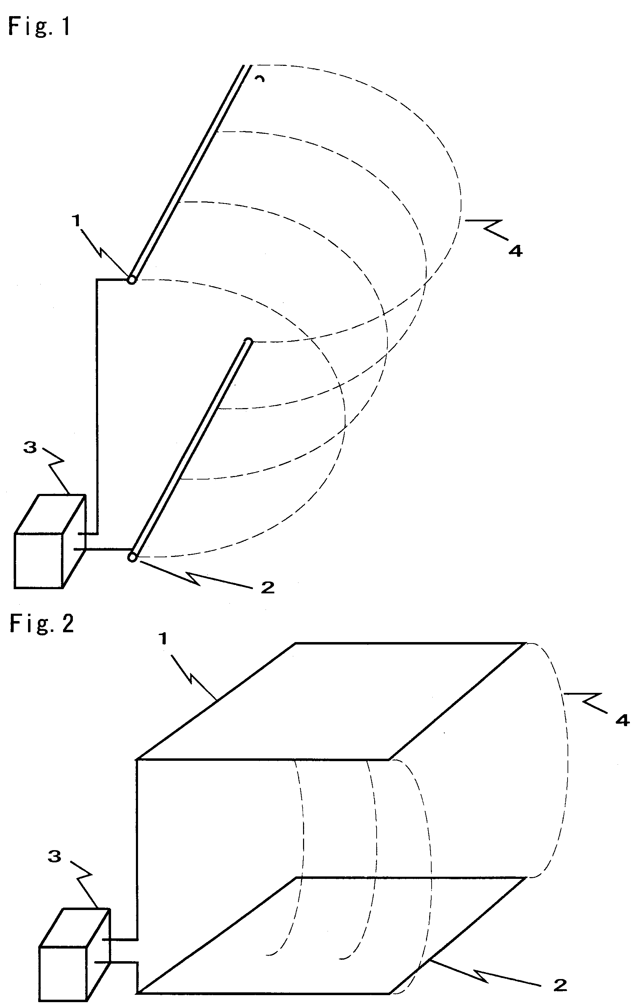

[Fig. 13]
An embodiment similar to the embodiment in Fig. 2.

[Fig. 14]
Another embodiment similar to the embodiment in Fig. 2.

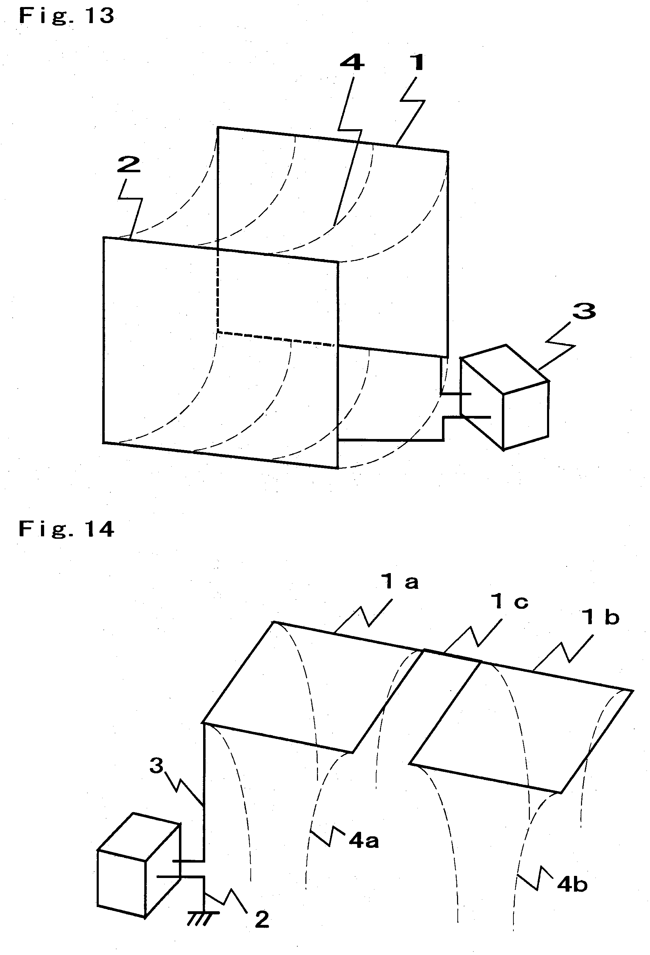

[Fig. 15]
Another embodiment similar to the embodiment in Fig. 14.

[Fig. 16]
The embodiment applied to a fork lift.

[Fig. 17]
The embodiment in which a data carrier is mounted on a pallet.

[Fig. 18]
The embodiment of a voltage generating device.

[Fig. 19]
Another embodiment of a voltage generating device.

[Fig. 20]
Another embodiment of a voltage generating device.

[Fig. 21] [Fig. 22]
Another embodiment of a voltage generating device.

[Fig. 23]
One embodiment showing an internal block in a data carrier system.

[Fig. 24]
One embodiment showing the data carrier system in detail.

[Fig. 25]
An embodiment showing the internal structure of a data carrier system.

[Fig. 26]
An embodiment showing the internal structure of a data carrier system.

[Fig. 27]
An embodiment showing the internal structure of a data carrier system.

[Fig. 28]
One embodiment of a data carrier using a wire shaped electrode.

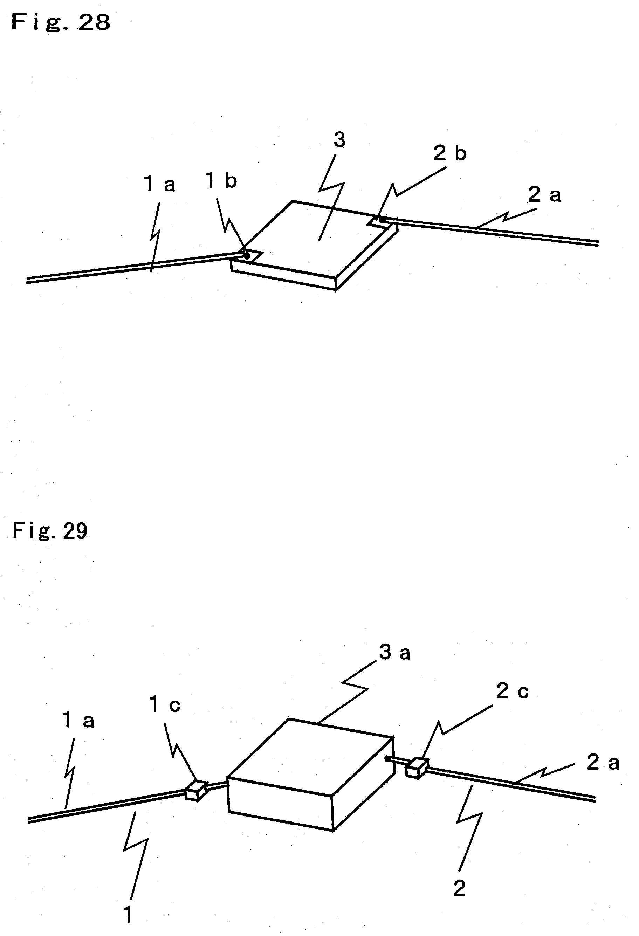

[Fig. 29]
A view of a case in which a data carrier as shown in Fig. 28 is installed.

[Fig. 30]
A view showing a human body loaded with a data carrier as shown in Fig. 29.

[Fig. 31]
A block diagram for showing inner structure of one embodiment of a data carrier.

[Fig. 32]
A perspective view showing an entire system.

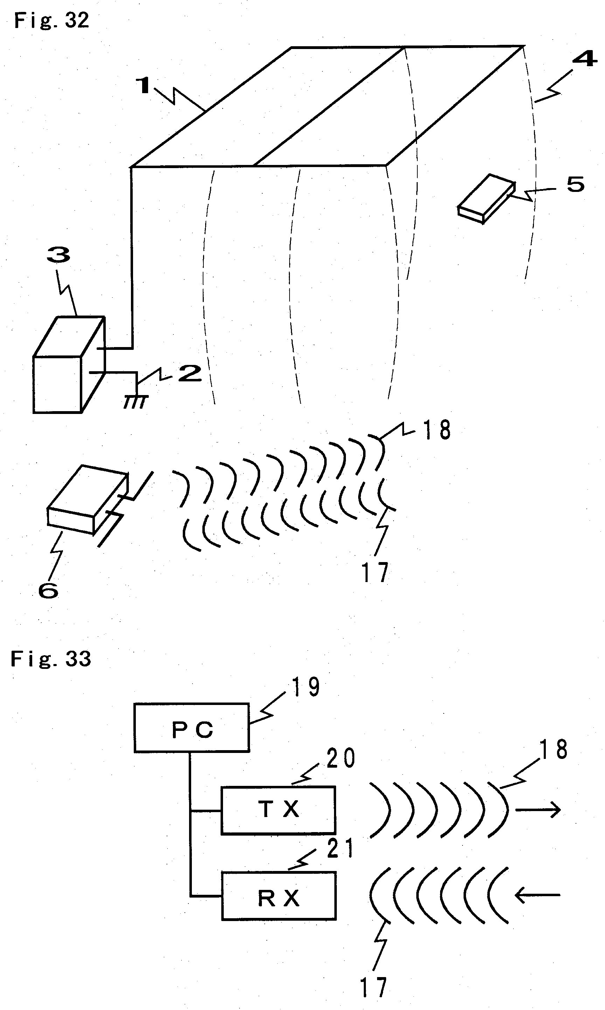

[Fig. 33]
A block diagram for showing the inner structure of the transceiver 6 as shown in Fig. 32.

[Fig. 34]
A block diagram for showing the data carrier attached with a sensor.

[Fig. 35]
An embodiment of pallet installed with a data carrier.

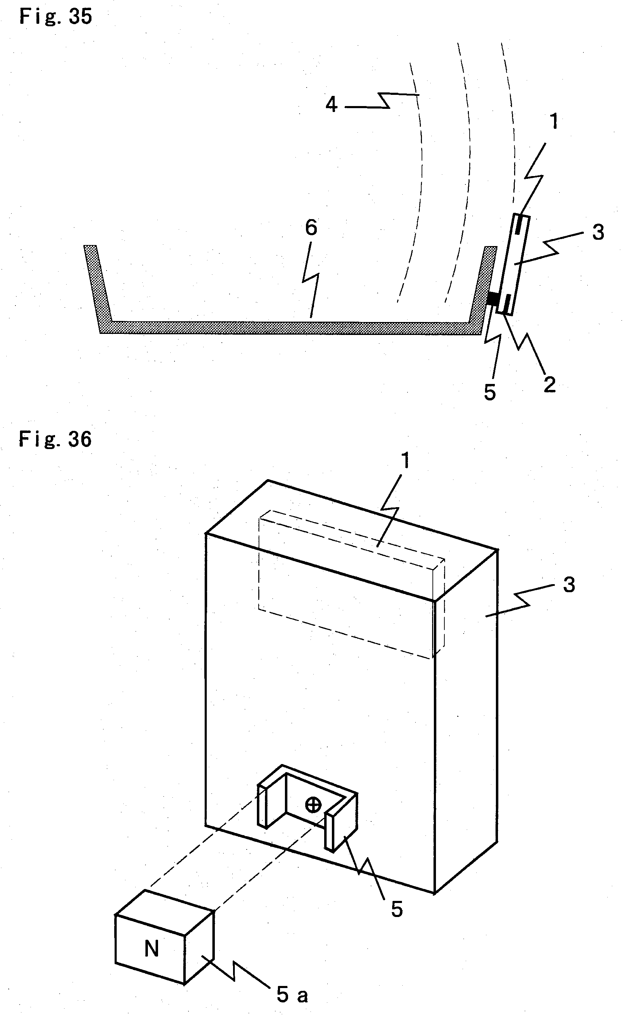

[Fig. 36]
An overview showing the surface to be attached to the data carrier as shown in Fig. 35.

**Detailed Description of the Invention**

The embodiment of this contactless data carrier system, with the above stated, is hereafter given in greater detail.

Both diagrams, Figure 1 and Figure 2, describe how power generated by an a.c. generator, number 3 on both figures, which applies alternating current (a.c.) voltage to a pair of wires, numbers 1 and 2 in both figures, causing an electrical field to be formed between the pair of wire electrodes, number 4 on both figures.

Description of figure 3. Number 1 and 2 are a pair of wire electrodes. number 3 is an a.c. power supply. Number 4 is an electrical field formed between the pair of wire electrodes. Number 5 is a high input impedance amplifier in a data carrier which has been brought within the electrical field. Ci is a capacitor set in parallel with a resistor Ri within the amplifier denoted as number 5. Number 6 and 7 denote a pair of electrodes, which form the input for the amplifier denoted as number 5.

C1 shows spatial distribution capacitance between conductor 1 and electrode 6. C2 shows spatial distribution capacitance between conductor 2 and electrode 7. As a result, the serial a.c. voltage, which was obtained by dividing the a.c. voltage in order over conductors 1 and 2 , as C1, Ci/Ri, C2, is applied over the electrodes 6 and 7.

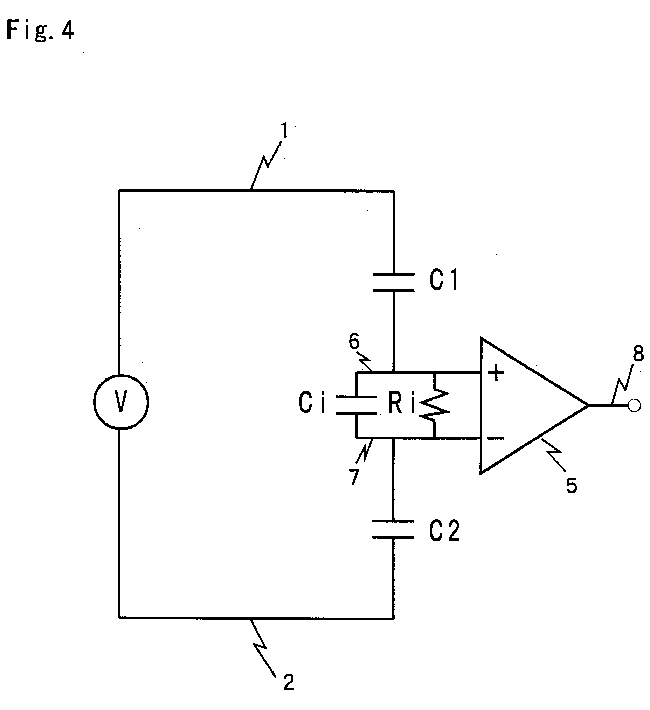

Fig. 4 is an equivalent circuit showing the above-mentioned serial divided voltages. The mark V is an a.c. voltage applied over the electrodes 1 and 2. In Fig. 4, numbers 5, 6, 7, C1, Ci/Ri, C2 are identical to that in Fig. 3. Therefore, a part of the energy of the voltage V is applied to Ci and Ri respectively.

Therefore, the voltage applied over electrodes 6 and 7 is amplified by amplifier 5 as shown in Fig. 4 to output voltage 8, and the output voltage 8 which was supplied by a battery is used to power ON signal for other electric circuits other than amplifier 5 within the data carrier, by actuating an electric source switch to ON. Furthermore, if the a.c. voltage V is a modulated a.c. voltage by the data, it is apparently possible to obtain the data by demodulating the output voltage 8, which is generally understood. It is also generally understood that the obtained data can be written to the memory within the data carrier.

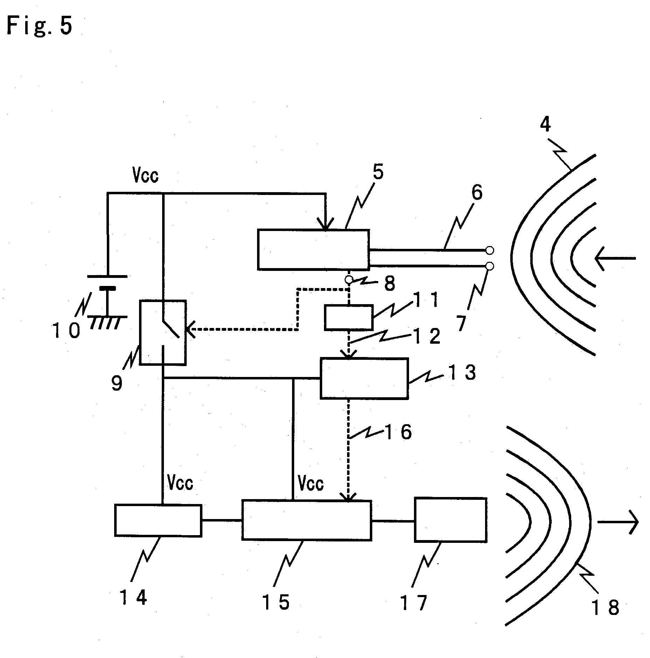

Referring now to Fig. 5, an electric circuit in the data carrier. Number 4 denotes lines of electric force. The members in Fig. 5, which are the same members as shown in other figures, are denoted with the same reference numbers respectively, and therefore numbers 1, 2, and 3 are omitted in Fig. 5. Number 5 denotes an amplifier with a high input impedance, numbers 6 and 7 are its input electrodes respectively. Number 8 is the output voltage of amplifier 5. When analog switch 9 is actuated, the electric source voltage Vcc is applied not only to the amplifier 5, but also to the other circuits. Amplifier 5 is supplied with voltage Vcc from battery 10 without regard to the actuation of switch 9, and since its consumption current is below 1 micro ampere, the life of battery 10 is above ten years if the battery's capacity is 560 mA·h.

The output voltage 8 is demodulated by demodulator 11, and output data 12 is written to memory 13. On the other hand, output from RF generator 14 is modulated by serial data transmission section 15 on the basis of data 16 from memory 13 as a modulation wave, and it is transmitted out from transmission antenna 17 as an answer transmit radio wave 18. When the answer transmit radio wave 18 is received by a receiver (not shown), this completes the data carrier's cycle. This is achieved by generally understood principle.

In general, by varying the frequency of the electric field 4 from that of the answer transmit radio wave 18, no crosstalk between them is obtained, as well-known.

The modulation type for transmission of wave 4 and the answer transmit wave 18 may be chosen depending upon the requirements from anyone of the following an amplitude modulation, a frequency modulation, a pulse cord modulation, a pulse width modulation, and a spectrum spread modulation.

It is easy to create an electric field over a wide space by applying voltage between a pair of thin conductors, since the electric field is attenuated very little in comparison with electromagnetic waves in general. It has been acknowledged that a room with a size of 50 m3, for example, can be entirely covered with an electric field by placing conductors 1 and 2 as shown in Fig. 2 on the ceiling and on the floor of the room.

The effective voltage value across conductors 1 and 2 is 900 volts and further, the voltage across electrodes 1 and 2 has no electrical power source maintaining safety by making the output impedance high of the a.c. voltage generator 3 or generating a high voltage due to a series resonance. In an experiment in which the frequency of the voltage applied between conductors 1 and 2 was arbitrarily selected in the range from 8 KHz to 50 kHz, there was found to be no large difference in the technical effect. The electric field generated between conductors 1 and 2 is much smaller than the limit for electric field strength as prescribed by radio wave laws.

Fig. 2 is an embodiment different from that in Fig. 1, number 1 and 2 are straight wire-shaped conductors, and the straight wire-shaped conductors are placed in the corners of the room. Figs. 6 and 7 show other embodiments in which one conductor of the pair of conductors 1 and 2 as shown in Fig. 1 and 2 is replaced by the earth. Numbers 1, 2, 3, and 4 denote the same member as shown in Figs. 1 and 2, and number 2 shows the earth. Fig. 8 shows another embodiment, in which 1 and 2 denote the section of plate-shaped conductors respectively. As a result of experiment, the plate-shaped conductors 1 and 2 may be a thin plate with a B5 size respectively. In Fig. 8, the same members as those used in Fig. 3 are attached to the same numbers as shown in Fig. 3 respectively.

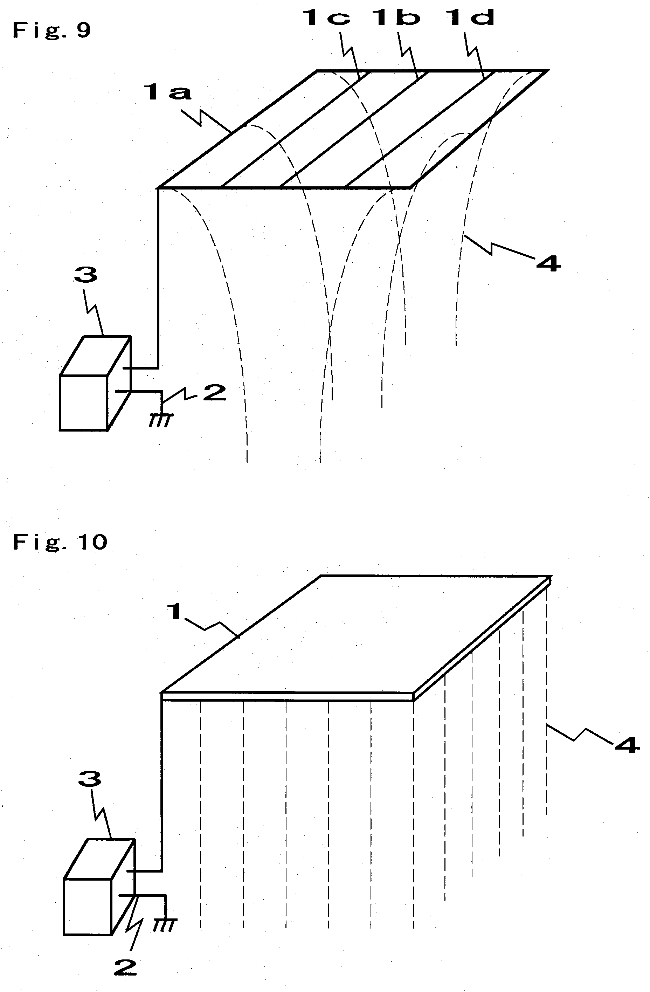

The embodiment shown in Fig. 9 is similar to that as shown in Figs. 7, and numbers 2, 3, and 4 in Fig. 9 are the same members as that as shown in Fig. 7, and further conductor 1 as shown in Fig. 2 is replaced by a conductor composed of a plurality of wires 1a, 1b, 1c, and 1d connected with each other. According to experiment, there is provided a very suitable electric field in the entire space since especially strong lines of electric force are concentrated at the central portion just under wire 1b. Moreover, it is also acknowledged that an electric field suitable for filling the room with a size of 60 m3 can be obtained, even in the case of omitting the wire-shaped conductors 1c and 1d.

The embodiment of Fig. 10 is similar to that of Fig. 7, and conductor 1 in Fig. 10 is a plate-shaped conductor capable of providing a uniform electric field which will fill the entire space. In Fig. 10, numbers 2, 3, and 4 are the same numbers as in Fig. 7.

The earth 2 in Figs. 9 and 10 may be reached by the wire shaped conductor 2 as shown in Fig. 2 and the plate-shaped conductor 1 as shown in Fig. 10 respectively, to obtain the equivalent effect of filling the entire space with an electric field.

Fig. 11 is a bird's eye view showing the embodiment of Fig. 8, and number 1 and 2 are the plate-shaped conductors; 3 is the voltage generator; and 4 is the lines of electric force. Fig. 12 shows an embodiment in which a pair of conductors 1a and 2a equivalent to conductors 1 and 2 as shown in Fig. 11 are placed in parallel with a pair of conductors 1b and 2b. Numbers 1a, 2a, 1b, and 2b are plate-shaped conductors, 4a and 4b are lines of electric force, and 3 is a voltage generator. Numbers 5a, 5b are switches, and 1a and 2a are conductors connected to voltage generator 3 by actuating only switch 5a, and by actuating only switch 5b, conductors 1b and 2b are connected to the voltage generator 3. Thus, the electric field can be switched between electric fields 4a and 4b. This switching of electric fields may also be utilized in the embodiments as shown in Figs. 1, 2, 6, 7, 8, 9, and 10, and it may apparently be possible to provide a plurality of pairs of conductors 1 and 2 and to switch the pairs of the conductors 1 and 2 as similar to the operation of Fig. 12. The apparatus as shown in Figs. 11 and 12 maybe utilized not only with the described type of device but also with a moving object such as a vehicles or other such objects. If a person fitted with the data carrier device moved into the path of the moving object it would detect the data carrier and halt avoiding any accident.

The embodiment of Fig. 13 is similar to Fig. 2, except that the conductors 1 and 2 are placed in a vertical direction, and therefore the lines of electric force 4 are generated in a horizontal direction to achieve the same basic effect as that in Fig. 2.

The embodiment of Fig. 14 is similar to that in Fig. 7, except that conductor 1 in Fig. 7 is replaced by electric conductors 1a and 1b which are placed parallel to each other and connected by the wire 1c. Lines of electric force may be produced by conductor 1a and the earth 2 or the conductor 1b and the earth 2 by using a switch (not shown) as mentioned in the embodiment of Fig. 12.

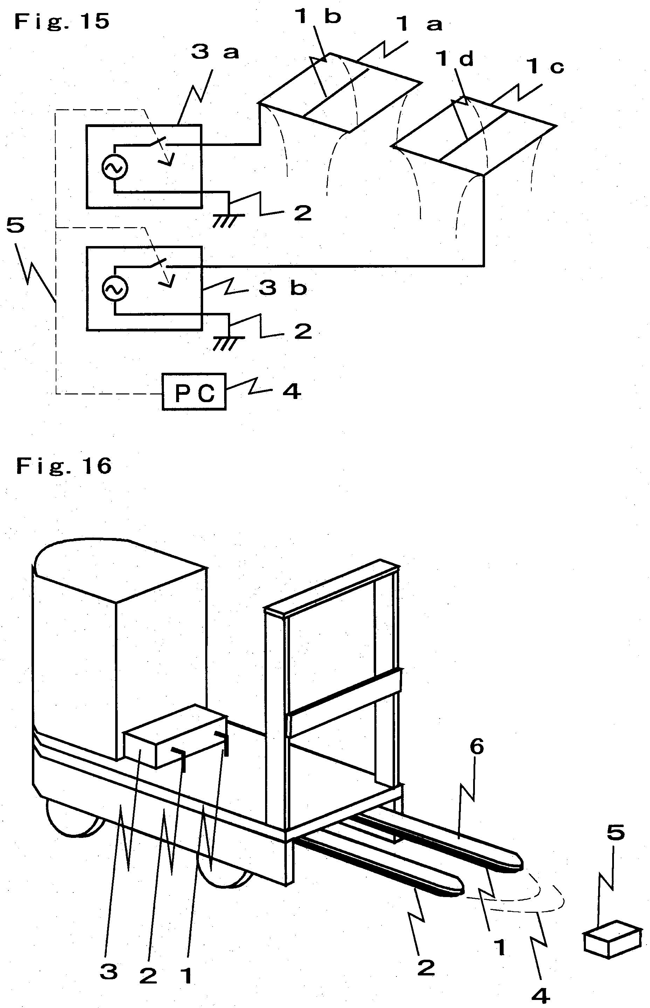

The embodiment of Fig. 15 provides two voltage generators 3a and 3b, and the electric field can be provided between the conductors 1a and 1b or the conductors 1c and 1d by actuating the switches installed in voltage generators 3a and 3b by means of a controller 4 or a computer.

Fig. 16 is the embodiment in which the embodiment as shown in Fig. 1 is utilized in a fork lift, and numbers 1 and 2 are wire shaped conductors which are similar to those in Fig. 1 while 3 is a voltage generator, 4 is lines of electric force, 5 is a data carrier, and 6 is a fork of the fork lift. When the forklift moves forward toward the data carrier 5, the data carrier receives the electric field due to the lines of electric force 4 and transmits the answer transmit signal toward the fork lift. The answer transmit signal is received by a receiver (not shown).

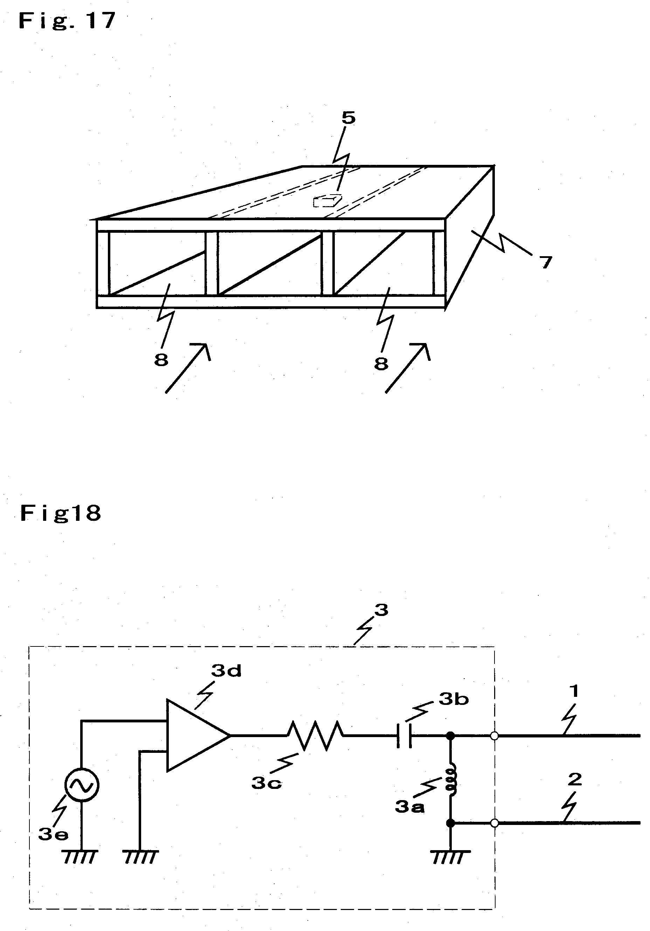

Fig. 17 shows pallet 7, for loading baggage on, with data carrier 5 as shown in Fig. 16 in place. The fork 6 of Fig. 16 is inserted into holes 8 of the pallet 7, then the data carrier 5 generates answer transmit wave as mentioned with respect to Fig. 16. Thus, it becomes possible to manage both pallets and baggage in a storehouse.

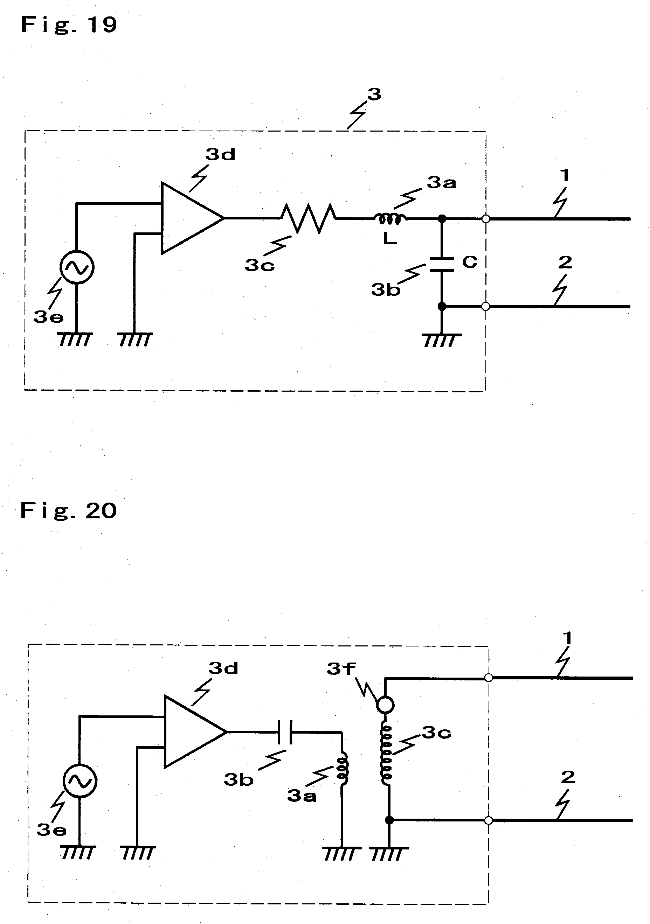

Fig. 18 shows a specific circuit of the voltage generator 3, 3a, 3b as shown in Figs. 1, 2, 3, 6, 7, 8, 9, 10, 11, 12, 13, 14, 15, and 16. In Fig. 18, number 3a is an inductor, 3b a capacitor, 3d an amplifier, and 3e an oscillator. 3c is a resistance component residing in the serial circuit of the inductor 3a, the capacitor 3b, and the amplifier 3d. The a.c. signal generated from oscillator 3e is amplified by the amplifier 3d and supplied to the serial circuit composed of a resister 3c, a capacitor 3b and an inductor 3a. The maximum voltage is generated between conductors 1 and 2, when the frequency $f = 1 / 2\pi\sqrt{LC}$ of the a.c. signal generated by oscillator 3e becomes equal to the serial resonance frequency of capacitor 3b and inductor 3a, where the inductance of the inductor 3a is L Henrys, the capacitance of the capacitor 3b is C Farads. Conductors 1 and 2 are the same as shown in Figs. 1 to 16. It has been acknowledged that if an operator touches conductor 1 or 2, the serial resonance frequency is diverted due to the impedance of the operator and therefore the voltage over conductors 1 and 2 is reduced instantaneously, thereby keeping it safe for the operator. If frequency f of the oscillator 3e is set above 10 kHz, only a weak current will flow to the body of the operator because of the outer skin's effect thereby achieving double safety protection. It is acknowledged that the high voltage generated between conductors 1 and 2 provide an effective electric field in the space residing between conductors 1 and 2.

Fig. 19 shows another possible embodiment of Fig. 18. Fig. 19, has the same members as those in Fig. 18. Except that conductors 1 and 2 may be connected to capacitor 3b, since both ends of the capacitor generate a high voltage due to serial resonance.

Fig. 20 shows another possible embodiment of a voltage generating device in which 3e is an oscillator, 3d is an amplifier, 3a is a primary inductor of a Tesla coil, and 3c is the secondary inductor thereof. Number 3f is the point at which high voltage is produced. When the frequency of the oscillator 3e is equal to the serial resonance frequency determined by capacitor 3b and inductor 3a, and further equal to the resonance frequency of the Tesla coil, a high voltage is produced between point 3f and the earth. Tesla coils 3a and 3c may or may not need a core. In general, the resonance frequency of a Tesla coil is high, and above ten kHz, but because of the outer skin's effect, there is no ill effect on the human body, thereby keeping it safe for the human operator it is similar to the above-mentioned embodiment. Numbers 1 and 2 are conductors similar to those in Fig. 19.

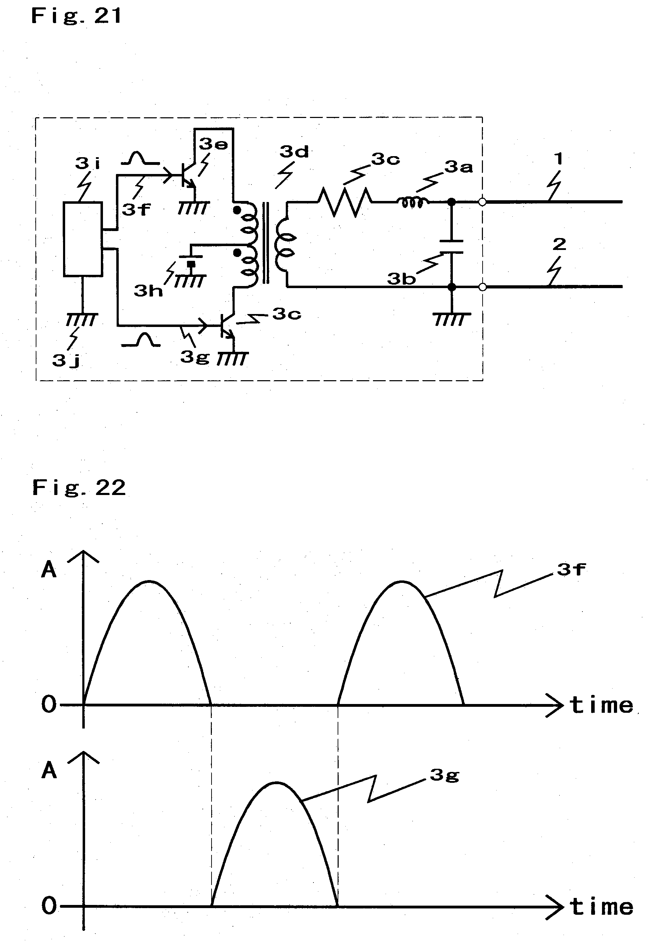

Fig. 21 shows another embodiment of a voltage generating device. The current 3f generated by a current generating circuit 3i becomes the base current for transistor 3e in order to drive transistor 3e. Similarly current 3g drives transistor 3c. Transistors 3e and 3c are alternately driven by the currents of 3f and 3g as shown by the wave forms in Fig. 22. Therefore, the current from the electric power source 3h drives the primary coil of transformer 3d with reversed polarity thereby generating a.c. voltage at the secondary coil of the transformer 3d. The output voltage produces serial resonance by means of resistor 3c, inductor 3a, and capacitor 3b, thereby producing a high voltage over the pair of electrodes 1 and 2. The transformer 3d may be an invertor transformer such as a fly-back transformer, a neon transformer or the like.

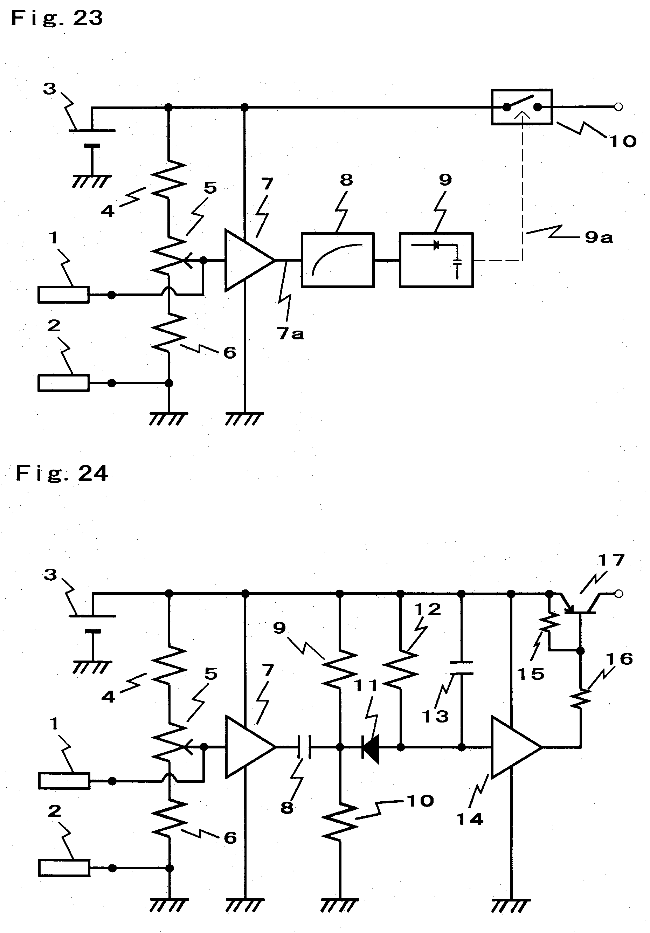

Fig. 23 shows a part of the data carrier which is the same as in Figs. 3, 4, and 5. In Fig. 23, electrodes 1 and 2 are the same electrodes as electrodes 6 and 7 in Fig. 3 and 5. Number 7 denotes an amplifier with a high input impedance and a low consumption current. A direct current input voltage is input into amplifier 7 as a bias voltage, and the d.c. input voltage is obtained by splitting the voltage from battery 3 by means of resistors 4 and 6 with high resistance and trimmer resistor 5 thereby driving amplifier 7 in an optimum way.. The input of amplifier 7 is connected to electrode 1, and electrode 2 is connected to the circuit's ground. When the data carrier enters into the electric field, the same voltage is produced as that produced between electrodes 6 and 7 in Fig. 3, at electrodes 1 and 2 in Fig. 23. At output 7a of amplifier 7, an amplified a.c. waveform is produced in the alternate electric field. Then, the output of amplifier 7 is fed into filter 8 to attenuate the components below 60 Hz and further fed to rectifier 9 to rectify the output from filter 8. Then, the output 9a from rectifier 9 is applied to switch 10 as a control signal for switch 10, and the voltage from battery 3 is also applied to other circuits in the data carrier system, except for the circuit in Fig. 23, when switch 10 is turned ON. In most rooms, there is normally an electric field with 60 Hz or 50 Hz generated by the indoor wiring of a commercial power source, and therefore it is necessary to avoid having switch 10 being undesirable actuated by an electric field below 60 Hz from a commercial power source as mentioned. The amplifier 5 in Fig. 5 is composed of high resistance resistors 4 and 6, trimmer resistor 5, amplifier 7, filter 8, and rectifier 9 in Fig. 23, and switch 10 in Fig. 23 corresponds to switch 9 in Fig. 5. The other circuits, except for the circuit as shown in Fig. 23, are parts of 11, 12, 13, 14, 15, and 17 in Fig. 5, and a CPU and RF receiver (not shown) may be included.

Fig. 24 shows one embodiment of the block diagrams shown in Fig. 23. In Fig. 24, the parts denoted by the numbers 1 to 7 are the same as those in Fig. 23, and number 8 is a capacitor, and 9 and 10 are resistors. The parts denoted by the numbers 8, 9, and 10 compose a high pass filter for attenuating the signal below 60 Hz. Number 11 denotes a Schottky barrier diode, 12 is a resistor, 13 is a capacitor, and the rectifier 9 in Fig. 23 is composed of a Schottky barrier diode 11, a resistor 12, and a capacitor 13. The direct current (d.c.) voltage output of the rectifier is amplified by amplifier 14, and then input to the base of transistor 17 through resistor 16 thereby actuating transistor 17. Number 15 is a resistor, and switch 10 in Fig. 23 is composed of the members denoted by numbers 15, 16, and 17. The operation of the circuit in Fig. 24 is the same as that in Fig. 23.

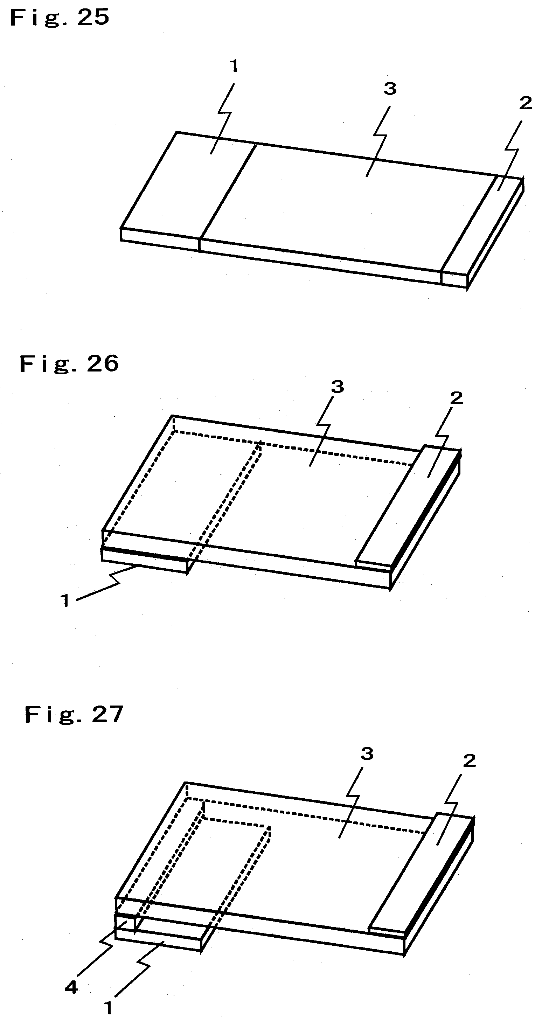

Fig. 25 shows a substrate used in the data carrier. Numbers 1 and 2 are the same electrodes as 1 and 2 in Figs. 23 and 24. Moreover, they are the same numbers 6 and 7 in Figs. 3 and 5. Number 3 denotes the location in which it is to be mounted the circuit elements in the data carrier. When the data carrier enters into the alternate electric field, a split voltage is generated between electrodes 1 and 2 due to electrostatic induction of an equivalent circuit as shown in Figs. 3 and 4.

Fig. 26 shows a modification of the data carrier as shown in Fig. 25 in which numbers 1 and 2 denote the same electrodes as in Fig. 25, and number 3 is also the same. Electrode 1 is mounted just below location 3. Electrode 1 is electrically insulated from location 3 in order to avoid having the circuit elements mounted on location 3 being in electrical contact with electrode 1.

Fig. 27 is an embodiment similar to that in Fig. 26, numbers 1, 2, and 3 denote the same members as shown in Fig. 26. Number 4 denotes a spacer for separating the electrodes 1 and substrate 3. Electrodes 1 and 2 may be mounted on the substrate in the data carrier, and they may be mounted on the inside of an insulated case for receiving the data carrier and connected to the substrate.

According to the experiment, it was acknowledged that when the data carrier as shown in Figs. 25, 26, and 27 was brought into the alternate electric field generated by the paired conductors 1 and 2, 1a to 1d, and 2a to 2b as shown in Figs. 1, 2, 6, 7, 8, 9, 10, 11, 12, 13, 14, and 15, that an effective voltage was generated over electrodes 1 and 2 in the data carrier due to an electrostatic induction phenomenon.

Fig. 28 is another embodiment of the data carrier. In the embodiment of Fig. 28, a plate shaped electrode 1 of the data carrier in Fig. 25 is replaced by a wire shaped electrode 1a, and the electrode 1a is connected with the substrate in the data carrier at the joint point 1b. Electrodes 1 and 2 in Figs. 23 and 24 correspond to 1b and 2b in Fig. 28 respectively. Similarly, plate shaped electrode 2 in Fig. 25 is replaced by the wire shaped electrode 2a, and the wire shaped electrode 2a is connected to the substrate of the data carrier at the joint point 2b. Number 3 is a space which has circuit elements similar to 3 in Fig. 25. It is acknowledged according to experiment that the plate shaped electrodes 1 and 2 in Fig. 25 may be replaced by wire shaped electrodes 1a and 2a to achieve a similar effect.

Fig. 29 shows case 3a, in which the substrate of the data carrier as shown in Fig. 28 is received, and 1a and 2a are the same wire shaped electrodes as those in Fig. 28. Numbers 1c and 2c are connectors or hooks for connecting electrodes 1a and 2a with the jointing points 1b and 2b as shown in Fig. 28 respectively, thereby obtaining the same connection as that in Fig. 28.

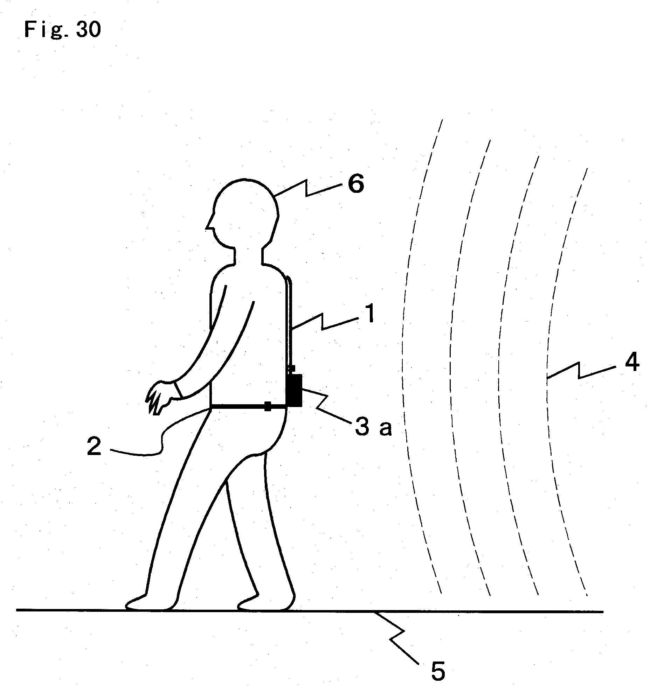

Fig. 30 is a view showing an operator loading the data carrier shown in Figs. 28 and 29. Numbers 1, 2, and 3a denote the same parts as those in Fig. 29. The electrodes 1 and 2 are attached to the back and the waist of the operator respectively, and electrodes 1 and 2 have only to be placed apart from each other, and it was acknowledged that the alternating electric field 4 is effectively detected and the alternating voltage is effectively generated between the electrodes 1 and 2. Number 5 denotes a ground. The voltage generating device is not shown, since it is apparent from the embodiments as mentioned above. It was also acknowledged that either one of the wire shaped conductors 1 and 2, for example, conductor 1 may be replaced by a plate shaped electrode 1 in the data carrier as shown in Fig. 25, thereby obtaining an equivalent effect although accessible distance is somewhat shortened.

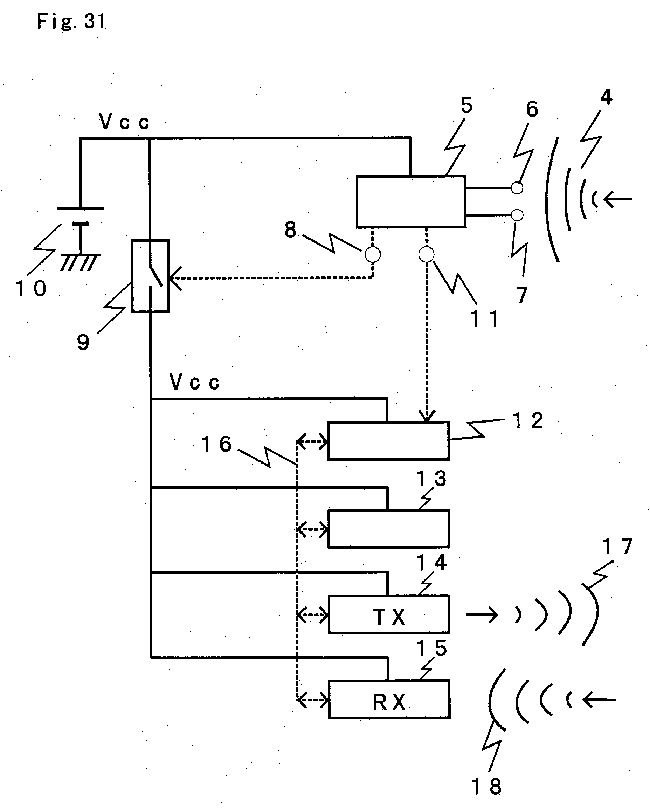

Fig. 31 is a block diagram of the inner circuit of the data carrier, and another possible embodiment in Fig. 5. In Fig. 31, numbers 1, 2, and 3 are omitted to make ease of identification, as similar to that in Fig. 5. Number 4 denotes the alternating electric field as similar to that in Figs. 1 and 2. Number 5 is an amplifier with a high input impedance and low consumption current, and numbers 6 and 7 are the input electrodes respectively, and further the a.c. voltage is generated between the electrodes 6 and 7 due to the alternating electric field 4. Number 8 is a control d.c. output generated from the rectifier 9 in Fig. 23, and the output actuates switch 9 in Fig. 31. Number 11 denoted output signal from the filter 8 in Fig. 23, and the wave form of the output signal 11 is a rectangular wave with the same frequency as that of the alternating electric field 4. Upon actuation of switch 9, the voltage Vcc of battery 10 is supplied to the other circuit elements 12, 13, 14, 15, and the like. Number 12 denotes a microprocessor or ASIC for controlling the data carrier. The dotted line 16 is a control signal. Number 13 is non-volatile memory for effecting a read/write operation with respect to circuit 12. Number 14 is a RF transmitter in which the data from circuit 12 is modulated to output a modulated RF wave 17 from the data carrier. Number 15 is a RF receiver in which the modulated RF waves 18 are transmitted from other transmitters and received, and then demodulated in order to retrieve the data and send it to circuit 12. The data writing operation to the data carrier may be achieved by using the modulated RF wave 18 received by receiver 15; however, alternatively it may be possible that the alternate electric field 4 which is modulated with data is received by amplifier 5, and signal 11 is fed to circuit 12 for demodulation thereby retrieving the data and writing the data into the data carrier.

The contactless data carrier system is shown in Fig. 32. Numbers 1 and 2 are the same pair of electrodes as those in Fig. 7. Number 3 is a voltage generating device, 4 are the lines of electric force, 5 is a data carrier, and 6 is a transceiver for transmitting the RF wave 18 and receiving the RF wave 17 in Fig. 31, and 18 is the same RF wave as received by the data carrier in Fig. 31. In this embodiment, the switch in the data carrier is actuated by the electric field 4 to supply electric power to all the circuits, and the transmitting operation for data is effected by the transceiver 6 using RF wave.

Fig. 33 shows a block diagram of the transceiver 6 as shown in Fig. 32. Numbers 1 to 16 have been omitted. Number 19 is a controller such as one used in a computer or sequencer, 20 is a transmitter used to transmit the RF transmitting wave 18 which has been modulated with the data received from the controller 19. Number 21 is a receiver used to receive the RF wave 17 generated from the data carrier to retrieve the data to be sent to the controller 19.

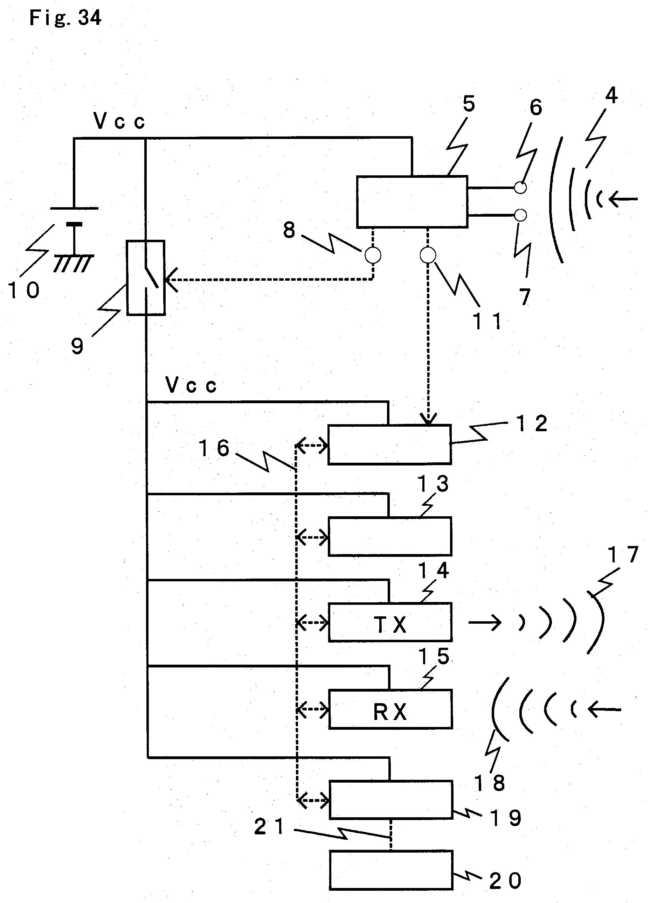

Fig. 34 is a block diagram of another embodiment of the data carrier. Numbers 4 to 18 are the same as Fig. 31. Number 19 is an AD converter, and 20 is a sensor. Sensor 20 may be installed inside or outside of the data carrier's case and sensor 20 may be connected to the AD converter 19 in the data carrier. Furthermore, if sensor 20 is an analog type, an AD converter 19 is necessary, but if sensor 20 is the type which outputs ON or OFF signals, an AD converter 19 is not necessary and signal 21 may be input into an input port on circuit 12. In this type of data carrier including a sensor, sensor 20 detects the data about external conditions, and the detected external conditions can be transmitted with RF wave 17 through circuit 12 and transmitter 14.

Fig. 35 shows another embodiment of the data carrier. Number 3 denotes one side of the case in which the data carrier has been installed, and numbers 1 and 2 are the same electrodes in the data carrier as those in Fig. 25. Number 5 is a magnet chuck mounted on the case of the data carrier, which is to be attached to a pallet 6 made of iron. The metallic portion of the magnet chuck 5 is connected to electrode 2 in the data carrier 3. The lines of electric force 4 of the alternate electric field produces a large difference in voltage between the electrode 1 and the pallet 6 thereby producing an effective alternate voltage between electrodes 1 and 2. Furthermore, it was acknowledged that a similar effect mentioned above was obtained by placing a magnet chuck 5 adjacent to electrode 2, without bringing the magnet chuck 5 in direct contact with electrode 2.

Fig. 36 is a view showing only data carrier 3 and magnet chuck 5 as shown in Fig. 35 in view of the surface to be attached to the pallet 6. Number 1 is the same internal electrode 1 as in Figs. 25 and 35. Number 3 is the data carrier's case. Magnet chuck 5 may be fixed to the data carrier body made of magnetic material using either screws or an adhesive agent, and it may also be fixed by fitting magnet 5a made of ferrite or the like into the recess 5 made of iron. The data carrier may be directly fixed to the pallet by either screws or other fastener, without using the magnet chuck 5, in the case where the pallet and member to be fixed are non-magnetic material. Alternatively, it may be possible to mount an iron plate on a portion of the surface of the non-magnetic member, and to attach the data carrier as shown in Fig. 36 on that portion of the surface by using a magnet chuck.

The features of the contactless data carrier system are as follows. (1) The system is very effective in accessing data over a wide space or a wide area. (2) Even if there are any obstacles between the data carrier and the transceiver, access to data can be achieved around the obstacle. With the features of the present invention in mind, the following applications are possible.

Application 1: Transportation management; In the case where a data carrier is attached to each item to be transported out of or into a storehouse, and a group of such items have been loaded onto a truck, such items can be checked by transmitting the alternating electric field toward the truck in order to examine the ID codes of each of the items and thereby automatically managing the items to be transported out of or into the storehouse. If an independent ID code is given to each independent item, the data carrier would response to each examination, without any crosstalk. The above application using the above-mentioned features that data can be accessed over a wide area. Furthermore, it may be possible to mount the carrier device on the outlet of a conveyer for transporting items a truck. The merit of accessing data within a wide area is remarkable, since the size of the items are different from each other.

Application 2: Rationalization of the production line; In the case where a data carrier is attached to each item transported by a conveyer, and all of the test data about the item obtained by each testing station is automatically written to the data carrier, the test results for each item being tested can be recognized instantaneously, thereby providing an automated manufacturing line capable of separating the products in accordance with their properties. The merit of the data carrier in which the data can be read or written in a wide area is remarkable, since there are many kinds of devices on manufacturing line and the space required for the devices is limited.

Application 3: Management of entering or exiting a room; When entering or exiting a room, the data carrier can be carried in your pocket, and the maximum effective distance for data access is about 3 m. Moreover, it is possible to enter or exit a room holding baggages with both hands. Furthermore, even when a security check is necessary for entering a repair factory, the data carrier in your pocket can be responsible for the security check without requiring the use of the operator's hands.

Application 4: When entering or exiting a garage or parking tower by car, the data carrier provided in the car can control the garage door by opening and closing it.

Application 5: Management of entering and exiting from a computer's room; The conventional ID check system using magnetic fields has not been used very frequently because of the possibility of causing the computers to malfunction. However, the present invention utilizes an alternating electric field which makes it perfect for an ID checking system. Moreover, the ID checking system of non-battery type systems is undesirable because they produce an excessively strong magnetic field which makes magnetic tape system unsuitable.

Application 6: Management on an assembling line for automobiles; In the case where a data carrier is attached to automotive parts and the data about each part is written to the data carrier from a remote position in a wide area, this application for automobiles is almost completed. As is well known, an automobiles are composed of many parts and processes, and therefore if the completion of a certain process is automatically written to the data carrier, it is possible to detect whether all processes have been completed or not, by reading the data carrier at the end of the assembling line. In automobile assembly lines using many robots, the space in the factory is limited, and therefore the present invention, which is capable of reading and writing of data from a remote position over a wide area, is very useful.

Application 7: Atomic energy power plant; The present invention, which is capable of reading and writing of data by using an electric field from a remote position over a wide area is very useful. It is also very helpful in the transportation of radioactive objects. Moreover, it is also suitable to apply the present invention to access either in or out of a radioactive zone. If the operator enters a zone that may be dangerous to his health an alarm would sound because the data carrier in his pocket would have transmitted his location, thereby increasing the safety of the operator. If the exposure time in a dangerous zone is written on the data carrier, the amount of radioactive exposure could be counted and therefore managed. The above-mentioned merit of being capable of read/write of data from a remote position over a wide area is very useful.

The present invention should not be limited to the embodiments mentioned above, and further it is apparent that the scope of the claims of this patent for the present application should include different modifications capable of achieving the equivalent method, the equivalent function, the equivalent effects due to an equivalent principle.

**Claims**

1. A contactless data carrier system that consists of:

    (a) an electric field generator having the means to produce an alternating electric field in the space between two electrodes by supplying an alternating voltage between the said two electrodes:

    (b) a data carrier having the means to sense the said alternating electric field and to convert part of the electrical field energy into an alternating electric signal;

    (c) a data carrier having the means to filter the said alternating electric signal to reduce the signals with frequencies below 60 Hertz.

2. In accordance with claim 1, said two electrodes are composed of a pair of wire shaped electrodes, or one continuous wire as one electrode and the earth (ground) acting as the other electrode.

3. In accordance with claim 1, said two electrodes are composed of a pair of plate electrodes, or one continuous plate as one electrode and the earth (ground) acting as the other electrode.

4. In accordance with claim 1, said means to sense the alternating electric field is an amplifier with high input impedance and also with a direct current (d.c.) bias voltage input.

5. In accordance with claim 4, said amplifier has at least one of the input terminals which is connected to either a plate electrode in the data carrier or a wire shaped electrode that protrudes from the data carrier.

6. In accordance with claim 1, said means to sense the alternating electric field is the said amplifier with high input impedance.
The power source of the said amplifier is connected to the battery inside the data carrier.
When the said amplifier senses the alternating electric field, an analog switch is turned on and the other circuits are supplied with power from the said battery.

Fig. 1

Fig. 2

## Fig. 3

Fig. 4

Fig. 5

Fig. 6

Fig. 7

Fig. 8

Fig. 9

1c 1b 1d

1a

3

2

4

Fig. 10

1

3

2

4

Fig. 11

Fig. 12

Fig. 13

4  1

2

3

Fig. 14

1 a

1 c

1 b

3

4a

2

4b

Fig. 15

Fig. 16

## Fig. 17

## Fig18

Fig. 19

Fig. 20

Fig. 21

Fig. 22

Fig. 23

Fig. 24

Fig. 25

Fig. 26

Fig. 27

Fig. 28

1 a    1 b    3    2 b    2 a

Fig. 29

1 a    1 c    3 a    2 c    2 a    1    2

Fig. 30

EP 0 702 316 A1

Fig. 31

26

Fig. 32

Fig. 33

PC

TX

RX

Fig. 34

Fig. 35

Fig. 36

European Patent Office

# EUROPEAN SEARCH REPORT

Application Number

## DOCUMENTS CONSIDERED TO BE RELEVANT

EP 95114147.2

| Category | Citation of document with indication, where appropriate, of relevant passages | Relevant to claim | CLASSIFICATION OF THE APPLICATION (Int. Cl. 6) |
|---|---|---|---|
| A | DE - A - 4 227 551 (EUROSIL) * Totality, specially abstract * | 1,6 | G 06 K 7/08 G 06 K 19/07 |
| A | DE - A - 4 224 390 (MITSUBISHI) * Abstract; fig. 1,5 * | 1,6 | |
| A | DE - A - 3 611 441 (FORTEC) * Claims 1-7; fig. 1-3 * | 1,6 | |
| A | DE - A - 4 025 107 (PEPPERL & FUCHS) * Totality; fig. 1,2 * | 1,6 | |
| A | DE - A - 3 630 456 (ZEISS IKON) * Totality, especially claims 1-8; fig. 1-10 * | 1-6 | TECHNICAL FIELDS SEARCHED (Int. Cl.6) G 06 K |

The present search report has been drawn up for all claims

| Place of search | Date of completion of the search | Examiner |
|---|---|---|
| VIENNA | 29-11-1995 | MIHATSEK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P0401)